# EUROPÄISCHE PATENTSCHRIFT

(11) **EP 2 618 702 B1**
(45) Veröffentlichungstag und Bekanntmachung des Hinweises auf die Patenterteilung: **06.05.2015**
(21) Anmeldenummer: 10760965.3
(22) Anmeldetag: 20.09.2010
(51) Int. Cl.: A47F 3/14, B65G 1/07, B65D 83/00, A47F 5/16

(54) **KISTE, STÄNDER, SYSTEM UND VERFAHREN ZUR PRÄSENTATION VON PRODUKTEN**
BOX, STAND, SYSTEM, AND METHOD FOR PRESENTING PRODUCTS
CAISSE, PRÉSENTOIR, SYSTÈME ET PROCÉDÉ DE PRÉSENTATION DE PRODUITS

(43) Veröffentlichungstag der Anmeldung: 31.07.2013
(73) Patentinhaber: IFCO Systems GmbH, 82049 Pullach (DE)
(72) Erfinder: RINGLER, Werner, 91085 Weisendorf (DE)
(74) Vertreter: Zimmermann, Tankred Klaus
(86) Internationale Anmeldenummer: PCT/EP2010/063800
(87) Internationale Veröffentlichungsnummer: WO 2012/037959

(56) Entgegenhaltungen:
- DE-A1- 19 948 940
- FR-A1- 2 706 732
- US-A- 3 203 554

## Beschreibung

Ausführungsbeispiele der Erfindung betreffen eine Kiste, insbesondere eine Steige oder eine Transportkiste zum Transport von Gütern, beispielsweise Lebensmitteln, sowie einen Ständer zur Aufnahme der Kiste zur Präsentation der darin befindlichen Produkte sowie auf ein System und ein Verfahren zur Präsentation von Produkten.

Kisten oder Steigen zur Aufnahme von Produkten sind im Stand der Technik, z.B. aus FR 2 706 732 A1, bekannt. Solche Steigen sind beispielsweise aus Kunststoff hergestellt und umfassen neben einem rechteckigen Boden gegenüberliegende Endseiten oder Endwände sowie gegenüberliegende Seitenwände. Die Höhe der entsprechenden Wände ist ausgewählt, um eine vorbestimmte Anzahl von Produkten innerhalb der Steige anzuordnen. Solche Steigen werden beispielsweise verwendet, um während der Ernte von Lebensmitteln, wie beispielsweise Gemüse oder Früchte, das geerntete Gemüse bzw. die geernteten Früchte auf dem Feld direkt in die Kisten einzubringen und dann die so gefüllten Kisten an die Weiterverkäufer und schlussendlich an Verkaufsstellen, wie beispielsweise Supermärkte oder ähnliches zu liefern. Die Kisten können beispielsweise aus Kunststoff hergestellt sein, wobei jedoch auch andere Materialien denkbar sind, beispielsweise Holz, Metall oder ähnliches. Die Kisten können faltbare Wände aufweisen, was ermöglicht, die Kisten nach deren Entleerung zusammenzufalten, so dass die Seitenwände in Richtung des Bodens umgeklappt werden, so dass für den Rücktransport der Kisten deren Volumen minimal ist und somit eine große Anzahl von Kisten gleichzeitig zurückbefördert werden kann.

In den Kisten befindet sich ein Träger, beispielsweise in Form eines Kartons oder einer Kunststoffplatte oder ähnlichen, der auf den Boden der Kiste vor deren Befüllung eingelegt ist, und auf dem die Produkte ruhen.

Erreicht die gefüllte Kiste beispielsweise den Supermarkt, so wird diese als ganze auf einem entsprechenden Ständer angeordnet, der zur Aufnahme der Kiste geeignet ist. Der Ständer kann beispielsweise die Kiste gegenüber einer Standfläche des Ständers geneigt aufnehmen, um so die in der Kiste befindlichen Produkte vorteilhaft gegenüber den Kunden zu präsentieren. Ein derartiger Ständer ist z.B. aus US 3 203 554 A bekannt.

Sind in der Kiste mehrere Lagen von Produkten übereinander angeordnet, so funktioniert die oben erwähnte Präsentation gut, solange nur eine oder nur wenige Lagen von Produkten aus der Kiste entfernt wurden. Werden jedoch immer mehr Lagen entfernt, so kann die Situation eintreten, dass von einem Standpunkt eines Betrachters aus, der die Kiste ansieht, die Produkte, die in den letzten Lagen enthalten sind, nur schwer oder ggf. gar nicht mehr zu erkennen sind. Dies ist beispielsweise dann der Fall, wenn die Kiste geneigt angeordnet ist und die letzte Lage der Produkte zur Hälfte entfernt ist. Aus einem Blinkwinkel eines Kunden oder Betrachters erscheint die Kiste dann aufgrund der geneigten Anordnung leer, da die verbleibenden Produkte innerhalb der Kiste in einem Bereich des Kistenbodens angeordnet sind, der durch eine dem Betrachter zugewandten Wand der Kiste vor den Blicken der Betrachter abgeschirmt ist, so dass die Kiste bereits als leer erscheint.

Diese Situation ist unerwünscht, da dann Produkte nicht erkannt werden und somit in der Kiste verbleiben und schlussendlich entsorgt werden müssen, da diese nicht zum Verkauf gelangt sind.

Ein weiterer Nachteil dieser Art der Präsentation besteht darin, das die Kiste mit zunehmender Entnahme der Produkte leerer erscheint, was im Hinblick auf eine optimale Präsentation der Produkte unerwünscht ist, da Kunden beispielsweise davon Abstand nehmen können, im unteren Bereich der Kiste befindliche Produkte auszuwählen, da diese zu Unrecht, als ggf. durch die darüber angeordneten Produkte beeinträchtigt angesehen werden.

Es ist die Aufgabe der vorliegenden Erfindung, einen Ansatz zu schaffen, der eine verbesserte Präsentation von Produkten, die in einer Kiste mehrlagig angeordnet sind, ermöglicht.

Diese Aufgabe wird durch eine Kiste gemäß Anspruch 1, einen Ständer gemäß Anspruch 8, ein System gemäß Anspruch 12 und ein Verfahren gemäß Anspruch 14 gelöst.

Die vorliegende Erfindung schafft eine Kiste mit einem Boden, zwei Endwänden und zwei Seitenwänden. In dem Boden ist eine Mehrzahl von Öffnungen gebildet, die dimensioniert sind, um jeweils eine Tragestange aufzunehmen. Ferner sind die Öffnungen so angeordnet, um einen in die Kiste eingelegten Träger bei in den Öffnungen eingeführten Tragestangen gleichmäßig anzuheben und an einer Position oberhalb des Bodens zu positionieren. Gemäß Ausführungsbeispielen der Erfindung haben die Öffnungen einen Durchmesser von 0,1cm bis 5cm.

Gemäß Ausführungsbeispielen der Erfindung sind die Öffnungen symmetrisch zu einem Mittelpunkt der Bodenfläche angeordnet.

Gemäß Ausführungsbeispielen der Erfindung befindet sich jeweils eine Öffnung in einer der Ecken des Bodens und zumindest eine Öffnung ist in einem mittleren Bereich des Bodens vorgesehen. Gemäß Ausführungsbeispielen sind in dem mittleren Bereich des Bodens vier Öffnungen vorgesehen, wobei gemäß weiteren Ausführungsbeispielen der Erfindung die Öffnungen in den Ecken jeweils denselben Abstand zu den den Öffnungen jeweils benachbarten Kanten aufweisen, wobei dieser Abstand zwischen etwa 1/8 bis etwa 1/4 der Länge der kurzen Kante liegt. Die Öffnungen im mittleren Bereich umfassen jeweils einen ersten Abstand zu den den Öffnungen nächstliegenden langen Kanten des Bodens und jeweils einen zweiten Abstand zu den den Öffnungen nächstliegenden kurzen Kanten des Bodens, wobei der erste Abstand zwischen etwa 1/3 und etwa 1/2 der Länge der kurzen Kante und der zweite Abstand zwischen etwa 1/4 und etwa 1/2 der Länge der langen Kante liegt.

Gemäß Ausführungsbeispielen der Erfindung handelt es sich bei dem in die Kiste eingelegten Träger um einen Träger aus einem starren Material, welches bei einer Unterstützung an verschiedenen Positionen eine ebene Form beibehält, also keine Durchbiegung aufweist. Das starre Material kann ein dickes Papier, ein Karton, eine Holzplatte oder eine Kunststoffplatte sein.

Gemäß Ausführungsbeispielen der Erfindung kann die Kiste ferner im Boden und/oder in den Wänden eine Mehrzahl von Lüftungsöffnungen aufweisen, um eine Zirkulation von Luft durch die Kiste zu ermöglichen. Gemäß Ausführungsbeispielen der Erfindung kann die Kiste faltbar sein, d. h. die Endwände und die Seitenwände können konfiguriert sein, um bezüglich des Bodens faltbar zu sein. Gemäß anderen Ausführungsbeispielen der Erfindung ist die Kiste aus Kunststoff hergestellt und dient vorzugsweise zur Aufnahme und /oder zum Transport von Lebensmitteln, z. B. Früchte, Gemüse, Fleisch, etc.

Die vorliegende Erfindung schafft ferner einen Ständer zur Aufnahme zumindest einer Kiste gemäß Ausführungsbeispielen der Erfindung, wobei der Ständer ein Tragegestell zur Aufnahme der Kiste sowie eine Mehrzahl von Tragestangen umfasst. Die Tragestangen sind an dem Tragegestell derart befestigbar, dass die Tragestangen bei einer Platzierung der Kiste auf dem Tragegestell durch die Öffnungen in dem Boden der Kiste in das Innere der Kiste eindringen.

Gemäß Ausführungsbeispielen der Erfindung sind die Tragestangen an dem Tragegestell beweglich angeordnet, um zwischen einer ersten Position und einer zweiten Position bewegt zu werden. In der ersten Position sind die Tragestangen so angeordnet, dass diese nicht in das Innere einer auf dem Tragegestell angeordneten Kiste eindringen. In der zweiten Position sind die Tragestangen angeordnet, um in das Innere eine auf dem Tragegestell angeordneten Kiste einzudringen.

Gemäß Ausführungsbeispielen der Erfindung sind die Tragestangen ferner ausgebildet, um so angeordnet zu werden, dass diese mit unterschiedlichen Eindringtiefen in das Innere der Kiste eindringen können. Beispielsweise können die Tragestangen teleskopisch oder längs verschiebbar, ggf. motorisch, ausgeführt sein, um so unterschiedliche Eindringtiefen einzustellen. Gemäß Ausführungsbeispielen der Erfindung wird das Tragegestell ausgebildet, um die Kiste unter einem Winkel zu einer Standfläche, auf der das Tragegestell angeordnet ist, zu tragen.

Die vorliegende Erfindung schafft ferner ein System zur Präsentation von Produkten, wobei das System eine Kiste gemäß Ausführungsbeispielen der Erfindung sowie einen Ständer gemäß Ausführungsbeispielen der Erfindung umfasst. Die Kiste enthält mehrere Produktlagen, wobei die Kiste auf dem Ständer mit den Tragestangen in der ersten Position angeordnet ist, wenn die Kiste alle oder eine vorbestimmte Anzahl von Lagen von Produkten enthält. Die Kiste ist auf dem Ständer mit den Tragestangen der zweiten Position angeordnet, wenn eine oder mehrere Lagen der Produkte aus der Kiste entfernt wurden.

Gemäß Ausführungsbeispielen der Erfindung wird die Eindringtiefe der Tragestangen in das Innere der Kiste mit abnehmender Anzahl der Produktlagen erhöht, so dass eine Produktlage stets nahe zu der Oberkante der Kiste angeordnet ist.

Die vorliegende Erfindung schafft ferner ein Verfahren zur Präsentation von Produkten, die in mehreren Lagen einer Kiste gemäß Ausführungsbeispielen der Erfindung angeordnet sind, wobei eine volle Kiste auf einem Ständer gemäß Ausführungsbeispielen der Erfindung, dessen Tragestangen in der ersten Position sind, angeordnet wird. Falls eine oder mehrere Lagen von Produkten aus der Kiste entfernt wurden, werden die Tragestangen von der ersten Position in die zweite Position bewegt, wodurch die Tragestangen in die Kiste eindringen und den eingepflegten Träger mit den darauf angeordneten Produkten bezüglich des Bodens der Kiste anheben.

Gemäß Ausführungsbeispielen der Erfindung wird die Eindringtiefe der Tragestangen in das Innere der Kiste mit abnehmender Anzahl der Produktlagen erhöht, so dass stets eine Produktlage nahe zu der Oberkante der Kiste angeordnet ist.

Nachfolgend werden unter Bezugnahme der beiliegenden Zeichnungen Ausführungsbeispiele der Erfindung näher erläutert. Es zeigen:
- Fig. 1: eine Darstellung einer beispielhaften Kiste oder Steige, die zur Aufnahme einer Mehrzahl von Produkten geeignet ist;
- Fig. 2: eine Draufsicht auf die Kiste aus Fig. 1;
- Fig. 3: eine Querschnittdarstellung der Kiste entlang der Linie 3-3' in Fig. 2 in einen gefüllten Zustand mit zwei Lagen von Produkten;
- Fig. 4: eine Abbildung ähnlich der in Fig. 3, bei der jedoch bereits alle Produkte bis auf einzelne Produkte in der untersten Lage entfernt wurden;
- Fig. 5: einen Ständer zur Aufnahme einer Kiste aus Fig. 1 bis 4;
- Fig. 6: eine Draufsicht auf eine Kiste gemäß Fig. 1, deren Boden gemäß einem Ausführungsbeispiel der Erfindung eine Mehrzahl Öffnungen zur Aufnahme von Tragestangen umfasst;
- Fig. 7: eine schematische Darstellung eines Ständers gemäß einem Ausführungsbeispielen der Erfindung zur Aufnahme von Kisten gemäß Ausführungsbeispielen der Erfindung, wobei Fig. 7(a) die Aufnahme einer befüllten Kiste zeigt, und Fig. 7(b) die Aufnahme einer teilweise entleerten Kiste zeigt; und
- Fig. 8: eine Schnittdarstellung entlang der Linie 8-8' aus Fig. 6 in einer Situation, in der eine erhöhte Positionierung der Produkte aus der untersten Lage erwünscht ist.

Nachfolgend werden anhand der Figuren Ausführungsbeispiele der Erfindung näher erläutert, wobei in den verschiedenen Figuren gleiche oder gleich wirkende Elemente mit gleichen Bezugszeichen versehen sind.

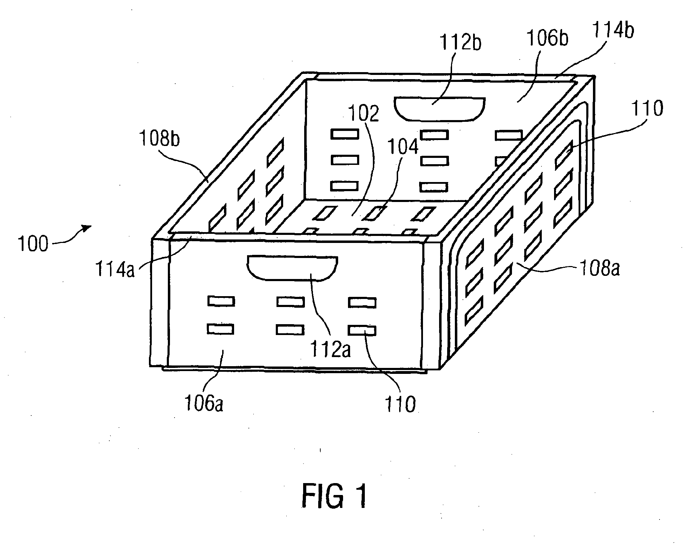

Fig. 1 zeigt eine Darstellung einer beispielhaften Kiste oder Steige, die zur Aufnahme einer Mehrzahl von mehreren Produkten geeignet ist. Fig. 1 zeigt eine herkömmliche Kiste 100, die einen rechteckförmigen Boden 102 aufweist, der eine Mehrzahl von Belüftungslöchern 104 umfasst. Senkrecht zu der Bodenfläche 102 sind zwei gegenüberliegende Endwände 106a und 106b angeordnet, die im Wesentlichen senkrecht zu dem Boden 102 angeordnet sind. Ferner umfasst die Kiste 100 zwei gegenüberliegende Seitenflächen 108a und 108b. Wie zu erkennen ist, umfassen sowohl die Endflächen als auch die Seitenflächen Belüftungslöcher 110. An dieser Stelle sei darauf hingewiesen, dass andere Kisten vorgesehen sein können, die mehr oder weniger Belüftungsöffnungen 104, 110 oder gar keine Belüftungsöffnungen umfassen. Die Endwände 106a und 106b umfassen ferner ein Griffloch 112a, 112b zum Anheben der Kiste, wobei die obere Kante 114a, 114b der Endwände 106a, 106b verstärkt sein kann, um ein Durchbrechen beim Anheben der Kiste im Bereich der Grifflöcher 112a und 112b zu vermeiden. Die in Fig. 1 gezeigte Kiste 100 kann klappbar ausgestaltet sein, d. h., die Endflächen und die Seitenflächen können in die Richtung des Bodens 102 eingeklappt werden, beispielsweise durch anfängliches Umklappen der Endwände 106a und 106b und anschließendes Umklappen der Seitenwände 108a und 108b. Hierdurch wird das Volumen der Kiste minimiert und beim Rücktransport der leeren Kisten ist es somit möglich, eine große Anzahl solcher Kisten gleichzeitig zu transportieren.

An dieser Stelle sei darauf hingewiesen, dass gemäß anderen Ausführungsbeispielen der Erfindung die Kiste nicht klappbar ausgestaltet sein kann, die Seiten- und Endwände also in der in Fig. 1 gezeigten Position fest angeordnet sind.

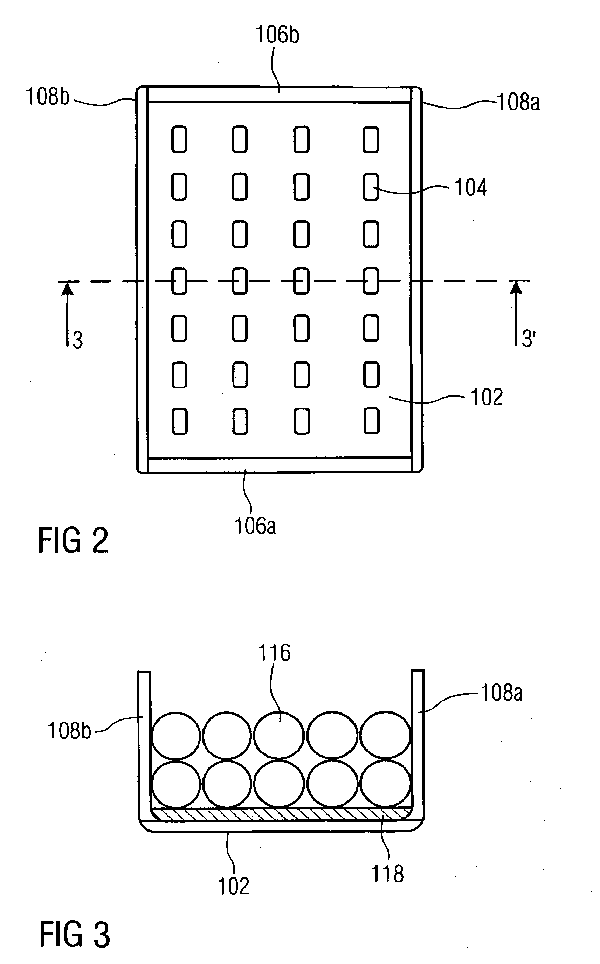

Fig. 2 zeigt eine Draufsicht auf die Kiste aus Fig. 1, wobei der Boden 102 sowie die Endwände 106a und 106b und die Seitenwände 108a und 108b zu erkennen ist. Neben den Entlüftungsöffnungen 104 umfasst der Boden 102 keine weitergehenden Öffnungen. Fig. 3 zeigt eine Querschnittdarstellung der Kiste entlang der Linie 3-3' in Fig. 2, wobei in Fig. 3 beispielhaft die Kiste in einen gefüllten Zustand dargestellt ist, in der zwei Reihen von Produkten 116 angeordnet sind. An dieser Stelle sei darauf hingewiesen, dass die in Fig. 3 gezeigte Füllung der Kiste lediglich beispielhaft ist und zur Erläuterung der Lehren der Erfindung schematisch gewählt ist, das jedoch auch noch mehr Lagen und unterschiedlich geformte Produkte enthalten sein können. In Fig. 3 ist der Boden 102 sowie die Seitenwände 108a und 108b gezeigt, zwischen denen die Produkte 116 angeordnet sind. Ferner ist im Regelfall auf dem Boden 102 ein Träger 118, beispielsweise in Form eines Papiers, eines Kartons, einer Platte aus Holz oder Kunststoff oder ähnlichem vorgesehen, auf dem die unterste Schicht von Produkten 116 ruht.

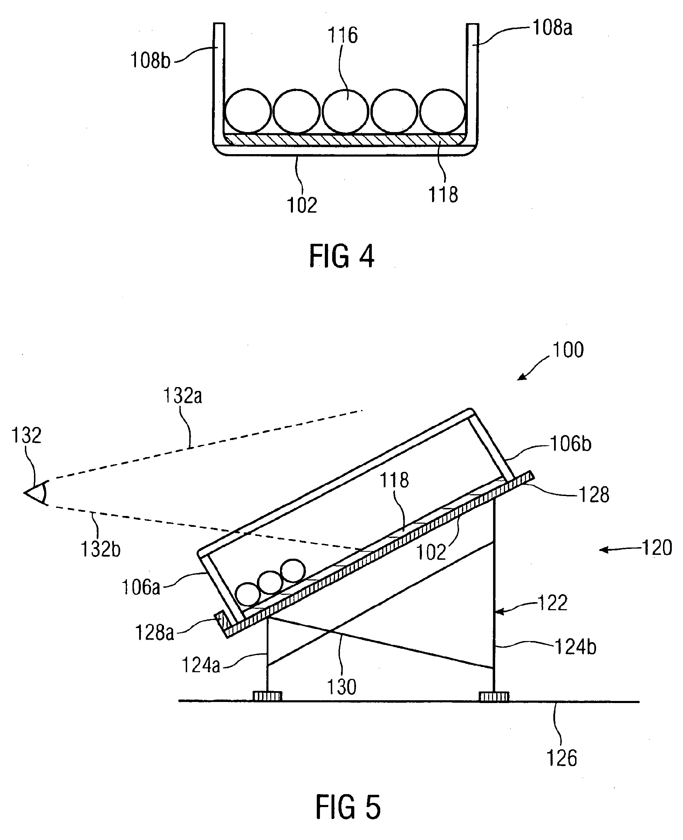

Fig. 4 zeigt eine Abbildung ähnlich der in Fig. 3, bei der jedoch bereits alle Produkte bis auf einzelne Produkte 116 in der untersten Lage entfernt wurden, also die Lage, die auf dem Boden 112 mit dem zwischen den Produkten 116 und dem Boden 102 angeordneten Träger 118 vorhanden sind.

Fig. 5 zeigt einen Ständer 120 zur Aufnahme einer Kiste 100, die oben beschrieben wurde. Der Ständer umfasst ein Tragegestell 122 mit einer Mehrzahl von Standfüßen 124a, 124b, deren unteren Enden auf einer Bodenfläche 126 ruhen, und deren obere Enden eine Tragestruktur 128 zur sicheren Aufnahme der Kiste 100 umfassen. Ferner ist eine Verstrebung 130 vorgesehen, um die Struktur und die Standfestigkeit des Trägers zu verbessern bzw. zu erhöhen. Bei dem in Fig. 5 gezeigten Ausführungsbeispiel ist der erste oder vordere Tragefuß 124a kürzer als der hintere Tragefuß 124b, so dass die Tragestruktur 128 gegenüber den Boden 126 geneigt ist und einen Vorsprung 128a aufweist, der ein Verrutschen der Kiste 100 nach unten vermeidet. Alternativ kann auch vorgesehen sein, die zwei Füße 124a und 124b mit gleicher Länge vorzusehen, so dass die Tragestruktur 128 und damit die darauf angeordnete Kiste im Wesentlichen parallel zur Standfläche 126 ist, auf der der Ständer 120 angeordnet ist.

In Fig. 5 ist die Kiste 100 mit einer teilweisen Befüllung schematisch dargestellt. Ähnlich wie in Fig. 4 wurden bereits die oberhalb der letzten Lage befindlichen Produkte entfernt, und ebenso wurde ein Teil der Produkte aus der unteren Lage bereits entfernt, so dass nur noch im Bereich angrenzend an die Endwand 106a die Produkte 116 angeordnet sind. Schematisch ist bei 132 eine Blickposition eines Betrachters des Ständers 120 mit der darauf angeordneten Kiste 100 dargestellt, sowie, ebenfalls schematisch bei 132a, 132b dessen Blinkwinkel. Wie aus der schematischen Darstellung in Fig. 5 zu erkennen ist, kann bei einer solchen Ausgestaltung die Situation auftreten, dass ein Betrachter die Kiste als bereits leer wahrnimmt, da sich die Produkte 116 bereits außerhalb seines Blickwinkels befinden. Dasselbe Problem stellt sich ein, wenn die Kiste horizontal angeordnet ist. Ferner ist die Präsentation der Produkte 116 auf die anhand der Fig. 5 beschriebenen Art und Weise, sei es in der geneigten Anordnung der Kiste oder in der horizontalen Anordnung der Kiste unerwünscht, wie dies oben erläutert wurde.

Um die anhand der Fig. 5 erläuterten Probleme, wie sie bei herkömmlichen Kisten gemäß dem Stand der Technik auftreten, zu vermeiden, sieht die vorliegende Erfindung eine neuartige Kiste vor, die nachfolgend näher erläutert wird.

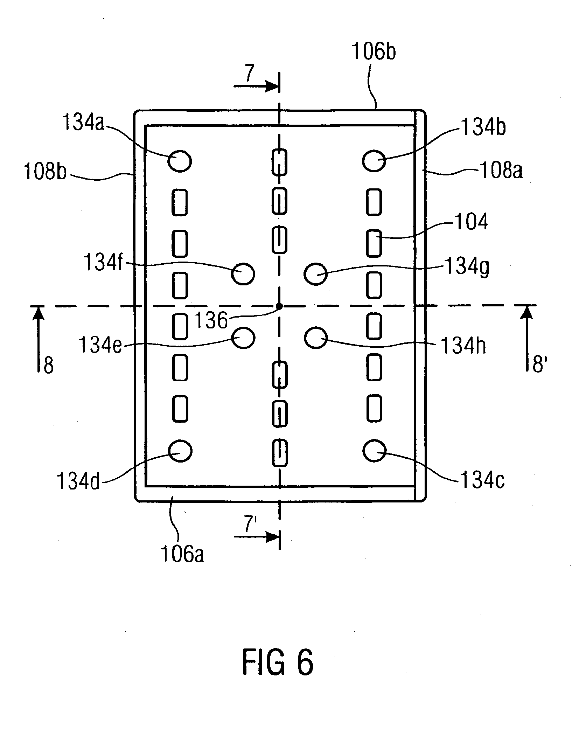

Fig. 6 zeigt eine Draufsicht auf eine Kiste gemäß Fig. 1, deren Boden 102 neben der Mehrzahl von Lüftungsöffnungen weitere Öffnungen 134a bis 134h aufweist. Bei dem gezeigten Ausführungsbeispiel gemäß Fig. 6 umfasst der Kistenboden 102 acht Öffnungen 134a bis 134h, wobei die ersten vier Öffnungen 134a bis 134d in den jeweiligen Ecken des Bodens 102 angeordnet sind. Gemäß Ausführungsbeispielen der Erfindung sind die Öffnungen 134a bis 134d jeweils mit demselben Abstand von den den jeweiligen Öffnungen nächstliegenden Kanten beabstandet. In einem mittleren Bereich der Bodenfläche 102 sind vier weitere Öffnungen 134e bis 134h angeordnet, wobei die Öffnungen 134e und 134f den gleichen Abstand zu der den Öffnungen nächstliegenden langen Kante des Bodens 102 benachbart zu der Seitenwand 108b aufweisen. Ebenso weisen die Öffnungen 134g und 134h den gleichen Abstand zu der diesen Öffnungen nächstliegenden langen Kanten des Bodens benachbart zu der Seitenwand 108a auf. Die Öffnungen 134f und 134g weisen den selben Abstand zu der diesen Öffnungen benachbarten kurzen Kante des Bodens 102 benachbart zur Endwand 106b auf, und die Öffnungen 134e und 134h weisen zu der kurzen Kante benachbart zu der ersten Endwand 106a denselben Abstand auf.

Die Öffnungen haben einen Durchmesser, der im Bereich von etwa 0,1cm bis etwa 5cm liegt.

Wie zu erkennen ist, sind die Öffnungen gleichmäßig über den Boden 102 verteilt, und sind vorgesehen, um das Eindringen von später noch beschriebenen Transportstangen in das Innere der Kiste zuzulassen, so dass ein auf dem Boden 102 angeordneter Träger 118 (siehe Fig. 3 und 4) durch die eindringenden Tragestangen gleichmäßig an eine Position oberhalb des Bodens angehoben wird. Bei dem in Fig. 6 gezeigten Ausführungsbeispiel wurde festgestellt, dass für einen starren Karton die Anordnung der Öffnungen 134a bis 134h ausreichend ist, um ein gleichmäßiges Anheben des mit Produkten beladenen Kartons, der auf der Bodenfläche ruht, zu ermöglichen. Andere Positionen der Löcher und auch mehr oder weniger Löcher können vorgesehen sein, abhängig von den mit der Kiste primär zu transportierenden Produkten und der Art des Trägers 118, insbesondere abhängig von dessen Steifigkeit. Für steifere Materialien werden weniger Löcher benötigt als für weniger steife Materialien. Vorzugsweise sind die Öffnungen, wie in Fig. 6 gezeigt ist, bezüglich eines Mittelpunkts 136 des Bodens 102 symmetrisch angeordnet.

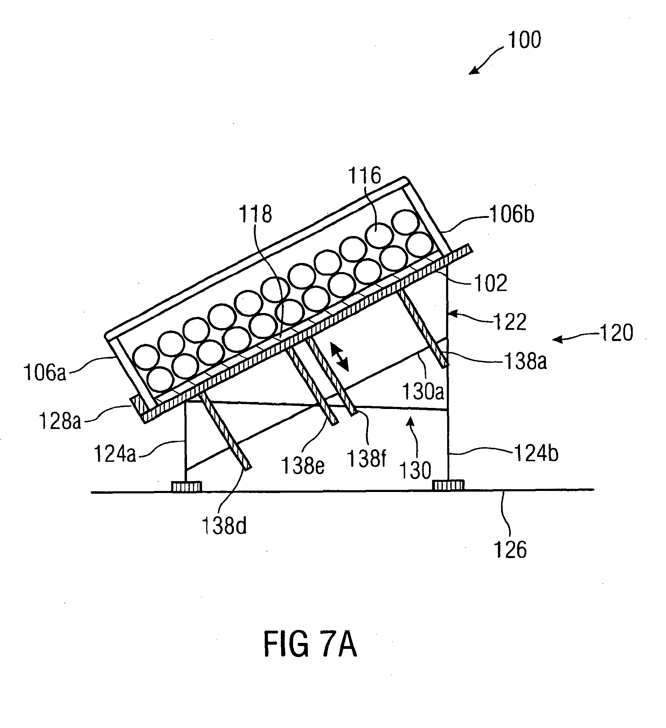

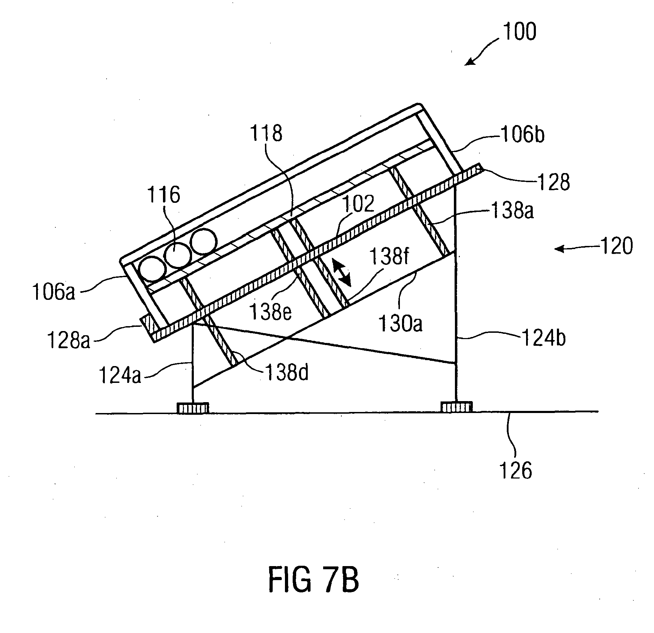

Fig. 7 zeigt eine schematische Darstellung eines Ständers gemäß Ausführungsbeispielen der Erfindung, der zur Aufnahme von Kisten gemäß Ausführungsbeispielen der Erfindung vorgesehen ist, wobei Fig. 7(a) die Aufnahme einer voll befüllten Kiste zeigt, und Fig. 7(b) die Aufnahme einer teilweise entleerten Kiste. Die Fig. 7 zeigt eine Schnittdarstellung eines Ständers mit darauf aufgebrachten Kiste 100 entlang der Linie 7 - 7' aus Fig. 6. Der Ständer entspricht im Wesentlichen dem Ständer gemäß Fig. 5, der jedoch zusätzlich Tragestangen 138a bis 138d umfasst, die in Fig. 7(a) in einer Position angeordnet sind, so dass die der Kiste zugewandten Ende der Tragestangen 138a bis 138d unterhalb der Tragestruktur 128 angeordnet sind. Die Tragestangen können aus einem geeigneten Material, beispielsweise einem Metall, einem Kunststoff, Holz oder ähnlichem hergestellt sein. Bei dem in Fig. 7(a) gezeigten Beispiel sind die Tragestangen 138a bis 138d an einer Strebe 130a der Verstrebung 130 angeordnet. Es sei darauf hingewiesen, dass gemäß anderen Ausführungsbeispielen die Tragestangen 138a bis 138d auch anders befestigt sein können, beispielsweise an zusätzlichen, am Tragegestell 130 angeordneten Tragestrukturen. In Fig. 7(a) befinden sich die Tragestangen 138a bis 138d in deren zurückgezogener oder unterer Position unterhalb der Tragestruktur 128, so dass diese mit der voll gefüllten Kiste 100, die auf der Tragestruktur 128 angeordnet ist, nicht Eingriff nehmen.

An dieser Stelle sei darauf hingewiesen, dass in Fig. 7(a) aufgrund der Schnittdarstellung lediglich vier Tragestangen gezeigt sind. Die Tragestangen 138a bis 138d sind bei dem anhand der Fig. 6 und 7 gezeigten Ausführungsbeispiel den Öffnungen 134b, 134c, 134g und 134h zugeordnet. Der Ständer 120 umfasst weitere vier Tragestangen, die in den Figuren nicht gezeigt sind, die den Öffnungen 134a, 134d, 134e und 134f der in Fig. 6 gezeigten Kiste zugeordnet sind. Auch diese in Fig. 7(a) nicht gezeigten Tragestangen befinden sich in der in Fig. 7(a) gezeigten Position unterhalb der Tragestruktur 128 bzw. unterhalb des Kistenbodens 102.

Die untere Position der Tragestangen kann alternativ auch so gewählt sein, dass diese teilweise in die Öffnungen im Kistenboden eindringen, ohne in das Innere der Kiste einzudringen, um so eine Verriegelung der Kisten auf der Tragestruktur 128 und damit eine verbesserte Standfestigkeit derselben herbeizuführen.

Fig. 7(b) zeigt eine Situation, in der bereits eine Mehrzahl von Produkten aus der Kiste 100 entfernt wurden, so dass beispielsweise nur noch eine geringe Anzahl von Produkten 116 in einem Bereich benachbart zur ersten Endwand 106a der Kiste angeordnet sind, ähnlich wie in der Kiste, die in Fig. 5 gezeigt ist. Wie aus Fig. 7(b) zu erkennen ist, sind bei dem Ständer gemäß einem Ausführungsbeispiel der Erfindung die Tragestangen 138a bis 138d jetzt jedoch in eine zweite Position gebracht, in der die Tragestangen 138a bis 138d und auch die nicht gezeigten Tragestangen durch die Öffnungen 134a bis 134h in das Innere der Kiste 100 eindringen und zu einem gleichmäßigen Anheben des Trägers 118 und damit der darauf angeordneten Produkte 116 führen, so dass diese mit einem Abstand von dem Boden 102 der Kiste angeordnet sind. Gemäß Ausführungsbeispielen der Erfindung sind die Tragestangen derart eingestellt, dass die Produkte benachbart zu der Oberkante der Kiste angeordnet sind. Hierdurch wird eine Wahrnehmung der Produkte und auch eine verbesserte Präsentation derselben gegenüber einem Betrachter sichergestellt, da zum einen auch die im vorderen Bereich der Kiste befindlichen Restprodukte 116 gut erkannt werden können und zum anderen auch in den unteren Lagen befindliche Produkte einem Betrachter gut präsentiert werden können.

Ausführungsbeispiele der Erfindung sind nicht auf eine Präsentation oder Anordnung der Kiste 100 unter einem Winkel bezüglich der Bodenfläche 126 beschränkt, vielmehr kann die Tragestruktur 128, wie oben bereits erwähnt, auch im Wesentlichen parallel zur Standfläche 126 angeordnet sein. Auch in diesem Fall wird für eine verbesserte Präsentation der Produkte 116 in der Kiste 100 bei zunehmender Entnahme der Produkte eine Einführung der Tragestangen in das Innere der Kiste bewirkt, um so eine Anordnung der Produkte oberhalb der Bodenfläche, beispielsweise benachbart zur Oberkante der Kiste stets sicherzustellen. Die Tragestangen 138a bis 138d können, wie in Fig. 7 gezeigt ist, derart beweglich an dem Ständer 120 bzw. dessen Tragegestell 130 angeordnet sein, um zwischen der in Fig. 7(a) gezeigten unteren, zurückgezogenen Position und der in Fig. 7(b) gezeigten oberen, ausgefahrenen Position bewegt zu werden. Alternativ können bei der in Fig. 7(a) gezeigten Situation auch nur entsprechende Aufnahmeelemente zur Befestigung von Tragestangen am Tragegestell des Ständers 120 vorgesehen sein, die eingesetzt werden, wenn eine erhöhte Präsentation der Produkte 116 in der Form gemäß Fig. 7(b) erwünscht ist. In diesem Fall wird der Ständer, der dann ähnlich wie in Fig. 5 in der Situation ist, in der die Kiste voll ist, dann um die Tragestangen 138 ergänzt, wenn eine oder mehrere Lagen von Produkten 116 aus der Kiste bereits entfernt wurden.

Sind die Tragestangen an dem Ständer 120 befestigt, können diese entweder linear von unten nach oben aus der ersten in die zweite Position bewegt werden, oder aus der ersten Position in die zweite Position umgeklappt werden oder auf andere geeignete Art und Weise zwischen den zwei Positionen bewegt werden.

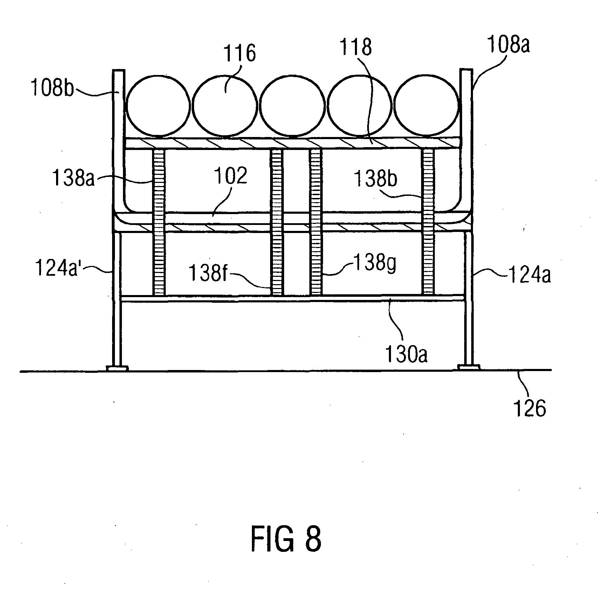

Fig. 8 zeigt eine Schnittdarstellung entlang der Linie 8-8' aus Fig. 6 in einer Situation, in der eine erhöhte Positionierung der Produkte 116 aus der untersten Lage erwünscht ist. Wie zu erkennen ist, ist der Träger 118 durch die gezeigten Stangen 138a und 138b und die übrigen Stangen angehoben, wobei in Fig. 8 ferner die Stangen 138g und 138f gezeigt sind, die durch die Öffnungen 134a, 134b, 134f und 134g in das Innere der Kiste eindringen.

Die Verwendung der anhand der Fig. 7 und 8 beschriebenen Tragestangen in Verbindung mit dem Ständer 120 sowie die entsprechende Ausgestaltung der Kiste gemäß Fig. 6 ermöglicht es somit, die oben erläuterten Probleme bei der Präsentation von Produkten sicher zu vermeiden, und stets sicherzustellen, dass Produkte an einer erwünschten Position innerhalb einer Höhe bezüglich des Bodens der Kiste angeordnet werden, wobei diese Höhe für eine optimale Position der Produkte 116 ausgewählt ist. Gemäß Ausführungsbeispielen der Erfindung können eine Vielzahl von Lagen von Produkten innerhalb einer Kiste 100 angeordnet sein, und beispielweise kann vorgesehen sein, mit jeder Lage, die entfernt wurde, die Tragestangen etwas weiter in das Innere der Kiste einzuführen, um stets eine gleiche Positionierung der Produktlagen bezüglich der Oberkante der Kiste sicherzustellen. Hierfür können die Stangen beispielsweise teleskopartig oder z.B. linear verschiebbar ausgestaltet sein, um eine schrittweise oder kontinuierliche Verstellung der Eindringtiefe zuzulassen, z.B. mittels eines Stell- oder Servomotors.

Gemäß Ausführungsbeispielen der Erfindung können die Öffnungen in dem Kistenboden gleiche oder unterschiedliche Abmessungen aufweisen, beispielsweise können die im Bereich der Bodenecken angeordneten Öffnungen einen größeren Durchmesser aufweisen als die im Zentralbereich des Bodens. Die Tragestangen sind dann entsprechend anzupassen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Kiste, mit:
einem Boden (102);
zwei Endwänden (106a, 106b);
zwei Seitenwänden (108a, 108b); und
einer Mehrzahl von Öffnungen (134a-134h) in den Boden (102);
**gekennzeichnet durch** einen in der Kiste (100) eingefügten Träger (118);
wobei jede der Öffnungen (134a-134h) dimensioniert sind, um eine Tragestange (138a-138f) aufzunehmen, und
wobei die Öffnungen (134a-134h) angeordnet sind, um den Träger (118) bei in die Öffnungen (134a-134h) eingeführten Tragenstangen (138a-138f) gleichmäßig anzuheben und an einer Position oberhalb des Bodens (102) zu positionieren.

2. Kiste nach Anspruch 1, bei der Öffnungen (134a-134h) symmetrisch zu einem Mittelpunkt (136) der Bodenfläche angeordnet sind.

3. Kiste nach Anspruch 1 oder 2, bei der jeweils eine der Öffnungen (134a-134d) in einer der Ecken des Bodens (102) und zumindest eine Öffnung (134e-134h) in einem mittleren Bereich des Bodens (102) angeordnet sind.

4. Kiste nach Anspruch 3, bei der vier Öffnungen (134e-134h) in dem mittleren Bereich des Bodens (102) angeordnet sind,
wobei der Boden (102) zwei gegenüberliegende kurze Kanten und zwei gegenüberliegende lange Kanten aufweist,
wobei die Öffnungen (134a-134d) in den Ecken jeweils denselben Abstand zu den den Öffnungen jeweils benachbarten Kanten aufweisen, wobei der Abstand zwischen etwa 1/8 bis etwa 1/4 der Länge der kurzen Kante liegt, und
wobei die Öffnungen (134e-134h) im mittleren Bereich jeweils einen ersten Abstand zu den den Öffnungen nächstliegenden langen Kanten und jeweils einen zweiten Abstand zu den den Öffnungen nächstliegenden kurzen Kanten aufweisen, wobei der erste Abstand zwischen etwa 1/3 und etwa 1/2 der Länge der kurzen Kante und der zweite Abstand zwischen etwa 1/4 und etwa 1/2 der Länge der langen Kante liegt.

5. Kiste nach einem der Ansprüche 1 bis 4, bei der der eingelegte Träger (118) aus einem starren Material besteht, das bei Unterstützung an verschiedenen Positionen eine ebene Form beibehält.

6. Kiste nach einem der Ansprüche 1 bis 5, bei der der Boden (102) eine Mehrzahl von Lüftungsöffnungen (104) aufweist.

7. Kiste nach einem der Ansprüche 1 bis 6, bei der die Endwände (106a, 106b) und die Seitenwände (108a, 108b) konfiguriert sind, um bezüglich des Bodens (102) faltbar zu sein.

8. Ständer zur Aufnahme zumindest einer Kiste (100) nach einem der Ansprüche 1 bis 7, mit:
einem Tragegestell (122) zur Aufnahme der Kiste (100); **gekennzeichnet durch**
einer Mehrzahl von Tragestangen (138a-138f), die an dem Tragegestell (132) derart befestigbar sind, dass die Tragestangen (138a-138f) bei einer Platzierung der Kiste (100) auf dem Tragegestell (122) **durch** die Öffnungen in dem Boden (102) der Kiste (100) in das Innere der Kiste (100) eindringen.

9. Ständer nach Anspruch 8, bei dem die Tragestangen (138a-138f) an dem Tragegestell (122) beweglich angeordnet sind, um zwischen einer ersten Position und einer zweiten Position bewegt zu werden,
wobei die Tragestangen (138a-138f) in der ersten Position nicht in das Innere einer auf dem Tragegestell (122) angeordneten Kiste eindringen; und
wobei die Tragestangen (138a-138f) in einer zweiten Position in das Innere einer auf dem Tragegestell (122) angeordneten Kiste (100) eindringen.

10. Ständer nach Anspruch 8 oder 9, bei dem das Tragegestell (122) ausgebildet ist, um die Kiste (100) unter einem Winkel zu einer Standfläche (126) zu tragen, auf der das Tragegestell (122) angeordnet ist.

11. Ständer nach einem der Ansprüche 8 bis 10, bei dem die Tragestangen (138a-138f) ausgebildet sind, um mit unterschiedlichen Eindringtiefen in das Innere der Kiste einzudringen.

12. System zum Präsentieren von Produkten (116), mit:
einer Kiste (100) nach einem der Ansprüche 1 bis 7; und
einem Ständer (120) nach einem der Ansprüche 8 bis 11,
wobei die Kiste (100) mehrere Lagen von Produkten (116) enthält,
wobei die Kiste (100) auf dem Ständer (120) mit den Tragestangen (138a-138f) in der ersten Position angeordnet ist, wenn die Kiste (100) eine vorbestimmte Anzahl von Lagen von Produkten (116) enthält, und
wobei die Kiste (100) auf dem Ständer (120) mit den Tragestangen (138a-138f) in der zweiten Position angeordnet ist, wenn eine oder mehrere Lagen der Produkte (116) aus der Kiste (100) entfernt sind.

13. System nach Anspruch 12, bei dem die Eindringtiefe der Tragestangen (138a-138f) in das Innere der Kiste (100) mit abnehmender Anzahl der Produktlagen erhöht wird, so dass eine Produktlage nahe zu der Oberkante der Kiste (100) angeordnet ist.

14. Verfahren zur Präsentation von Produkten (116), mit folgenden Schritten:
Anordnen einer Kiste (100) nach einem der Ansprüche 1 bis 7, die eine vorbestimmte Anzahl von Lagen von Produkten (116) enthält, auf einem Ständer (120) nach einem der Ansprüche 8 bis 11, dessen Tragestangen (138a-138f) in der ersten Position sind; und
falls eine oder mehrere Lagen von Produkten (116) aus der Kiste (100) entfernt wurden, Bewegen der Tragestangen (138a-138f) von der ersten Position in die zweite Position, wodurch die Tragestangen (138a-138f) in die Kiste (100) eindringen und den eingelegten Träger (118) mit den darauf angeordneten Produkten (116) bezüglich des Bodens (102) der Kiste (100) anheben.

15. Verfahren nach Anspruch 14, bei dem die Eindringtiefe der Tragestangen (138a-138f) in das Innere der Kiste (100) mit abnehmender Anzahl von Produktlagen erhöht wird, so dass eine Produktlage nahe zu einer Oberkante der Kiste (100) angeordnet ist.

## Claims

1. A box, comprising:
a floor (102);
two end walls (106a, 106b);
two side walls (108a, 108b); and
a plurality of openings (134a-134h) in the floor (102);
**characterized by** a carrier (118) introduced into the box (100);
wherein each of the openings (134a-134h) is dimensioned to receive a supporting bar (138a-138f), and
wherein the openings (134a-134h) are arranged to uniformly lift the carrier (118) at supporting bars (138a-138f) introduced into the openings (134a-134h) and position the same at a position above the floor (102).

2. The box according to claim 1, wherein the openings (134a-134h) are arranged symmetrically with respect to a center point (136) of the floor surface.

3. The box according to claims 1 or 2, wherein one of the openings (134a-134d) each is arranged in one of the corners of the floor (102) and at least one of the openings (134e-134h) is arranged in a central area of the floor (102).

4. The box according to claim 3, wherein four openings (134e-134h) are arranged in the central area of the floor (102),
wherein the floor (102) comprises two opposing short edges and two opposing long edges,
wherein the openings (134a-134d) in the corners each comprise the same distance to the respective edges which are adjacent to the openings, wherein the distance is between approximately 1/8 and approximately ¼ of the length of the short edge, and
wherein the openings (134e-134h) in the central area each comprise a first distance to the long edges closest to the openings and each comprise a second distance to the short edges closest to the openings, wherein the first distance is between approximately 1/3 and approximately ½ of the length of the short edge and the second distance is between approximately ¼ and approximately ½ of the length of the long edge.

5. The box according to one of claims 1 to 4, wherein the inserted carrier (118) consists of a rigid material which maintains a level shape when supported at different positions.

6. The box according to one of claims 1 to 5, wherein the floor (102) comprises a plurality of ventilation openings (104).

7. The box according to one of claims 1 to 6, wherein the end walls (106a, 106b) and the side walls (108a, 108b) are configured to be foldable with respect to the floor (102).

8. A rack for receiving at least one box (100) according to one of claims 1 to 7, comprising:
a supporting frame (122) for receiving the box (100);
**characterized by**
a plurality of supporting bars (138a-138f), mountable to a supporting frame (132) such that the supporting bars (138a-138f), when placing the box (100) onto the supporting frame (122), penetrate through the openings in the floor (102) of the box (100) into the interior of the box (100).

9. The rack according to claim 8, wherein the supporting bars (138a-138f) are arranged movable at the supporting frame (122) in order to be moved between a first position and a second position,
wherein the supporting bars (138a-138f) in the first position do not enter into the interior of a box arranged on the supporting frame (122); and
wherein the supporting bars (138a-138f) in a second position enter into the interior of a box (100) arranged on the supporting frame (122).

10. The rack according to claims 8 or 9, wherein the supporting frame (122) is implemented to support the box (100) at an angle to the footprint (126) on which the supporting frame (122) is arranged.

11. The rack according to one of claims 8 to 10, wherein the supporting bars (138a-138f) are implemented to penetrate into the interior of the box by different penetration depths.

12. A system for presenting products (116), comprising:
a box (100) according to one of claims 1 to 7; and
a rack (120) according to one of claims 8 to 11;
wherein the box (100) contains several layers of products (116),
wherein the box (100) is arranged on the rack (120) with the supporting bars (138a-138f) in the first position, when the box (100) contains a predetermined number of layers of products (116), and
wherein the box (100) is arranged on the rack (120) with the supporting bars (138a-138f) in the second position, when one or several layers of the products (116) have been removed from the box (100).

13. The system according to claim 12, wherein the penetration depth of the supporting bars (138a-138f) into the interior of the box (100) is increased with a decreasing number of product layers, so that a product layer is arranged close to the upper edge of the box (100).

14. A method for the presentation of products (116), comprising:
arranging a box (100) according to one of claims 1 to 7, which contains a predetermined number of layers of products (116), on a rack (120) according to one of claims 8 to 11, whose supporting bars (138a-138f) are in the first position; and
if one or several layers of products (116) have been removed from the box (100), moving the supporting bars (138a-138f) from the first position into the second position, whereby the supporting bars (138a-138f) penetrate into the box (100) and lift the inserted carrier (118) with the products (116) arranged thereon with respect to the floor (102) of the box (100).

15. The method according to claim 14, wherein the penetration depth of the supporting bars (138a-138f) into the interior of the box (100) is increased with a decreasing number of product layers, so that a product layer is arranged close to an upper edge of the box (100).

## Revendications

1. Caisse, avec:
un fond (102);
deux parois d'extrémité (106a, 106b);
deux parois latérales (108a, 108b); et
une pluralité d'ouvertures (134a à 134h) dans le fond (102);
**caractérisée par** un support (118) inséré dans la caisse (100);
dans laquelle chacune des ouvertures (134a à 134h) est dimensionnée pour recevoir une tige de support (138a à 138f), et
dans laquelle les ouvertures (134a à 134h) sont aménagées pour soulever, à tiges de support (138a à 138f) insérées dans les ouvertures (134a à 134h), uniformément le support (118) et pour le positionner en une position au-dessus du fond (102).

2. Caisse selon la revendication 1, dans laquelle des ouvertures (134a à 134h) sont disposées symétriques par rapport à un point central (136) de la surface de fond.

3. Caisse selon la revendication 1 ou 2, dans laquelle chaque fois une des ouvertures (134a à 134d) est disposée dans l'un des coins du fond (102) et au moins une ouverture (134e à 134h) est disposée dans une zone centrale du fond (102).

4. Caisse selon la revendication 3, dans laquelle quatre ouvertures (134e à 134h) sont disposées dans la zone centrale du fond (102),
dans laquelle le fond (102) présente deux bords courts opposés et deux bords longs opposés,
dans laquelle les ouvertures (134a à 134d) dans les coins présentent, chacune, la même distance par rapport aux bords respectifs adjacents aux ouvertures, la distance étant comprise entre environ 1/8 et environ 1/4 de la longueur du bord court, et
dans laquelle les ouvertures (134e à 134h) dans la zone centrale présentent, chacune, une première distance par rapport aux bords longs les plus rapprochés des ouvertures et, chacune, une deuxième distance par rapport aux bords courts les plus rapprochés des ouvertures, la première distance étant comprise entre environ 1/3 et environ 1/2 de la longueur du bord court et la deuxième distance étant comprise entre environ 1/4 et environ 1/2 de la longueur des bords longs.

5. Caisse selon l'une des revendications 1 à 4, dans laquelle le support inséré (118) est réalisé en un matériau rigide qui maintient, en cas de support en différentes positions, une forme plane.

6. Caisse selon l'une des revendications 1 à 5, dans laquelle le fond (102) présente une pluralité de trous d'aération (104).

7. Caisse selon l'une des revendications 1 à 6, dans laquelle les parois d'extrémité (106a, 106b) et les parois latérales (108a, 108b) sont configurées de manière à être pliables par rapport au fond (102).

8. Présentoir pour recevoir au moins une caisse (100) selon l'une des revendications 1 à 7, avec:
un bâti de support (122) destiné à recevoir la caisse (100);
**caractérisé par**
une pluralité de tiges de support (138a à 138f) qui peuvent être fixées au bâti de support (132) de sorte que les tiges de support (138a à 138f) pénètrent, lors d'un placement de la caisse (100) sur le bâti de support (122), à travers les ouvertures dans le fond (102) de la caisse (100), à l'intérieur de la caisse (100).

9. Présentoir selon la revendication 8, dans lequel les tiges de support (138a à 138f) sont disposées de manière déplaçable sur le bâti de support (122) pour être déplacées entre une première position et une deuxième position,
dans lequel lesdites tiges de support (138a à 138f) ne pénètrent, dans la première position, pas à l'intérieur d'une caisse disposée sur le bâti de support (122); et
dans lequel lesdites tiges de support (138a à 138f) pénètrent, dans une deuxième position, à l'intérieur d'une caisse (100) disposée sur le bâti de support (122)

10. Présentoir selon la revendication 8 ou 9, dans lequel le bâti de support (122) est conçu pour porter la caisse (100) selon un angle par rapport à une face d'appui (126) sur laquelle est disposé le bâti de support (122).

11. Présentoir selon l'une des revendications 8 à 10, dans lequel les tiges de support (138a à 138f) sont réalisées pour pénétrer à des profondeurs de pénétration différentes à l'intérieur de la caisse.

12. Système de présentation de produits (116), avec:
une caisse (100) selon l'une des revendications 1 à 7; et
un présentoir (120) selon l'une des revendications 8 à 11,
dans lequel la caisse (100) contient plusieurs couches de produits (116),
dans lequel la caisse (100) est disposée sur le présentoir (120) avec les tiges de support (138a à 138f) dans la première position lorsque la caisse (100) contient un nombre prédéterminé de couches de produits (116), et
dans lequel la caisse (100) est disposée sur le présentoir (120) avec les tiges de support (138a à 138f) dans la deuxième position lorsqu'une ou plusieurs couches de produits (116) ont été enlevées de la caisse (100).

13. Système selon la revendication 12, dans lequel la profondeur de pénétration des tiges de support (138a à 138f) à l'intérieur de la caisse (100) est augmentée à nombre décroissant de couches de produits, de sorte qu'une couche de produits soit disposée à proximité du bord supérieur de la caisse (100).

14. Procédé de présentation de produits (116), aux étapes suivantes consistant à:
disposer une caisse (100) selon l'une des revendications 1 à 7 qui contient un nombre prédéterminé de couches de produits (116) sur un présentoir (120) selon l'une des revendications 8 à 11, dont les tiges de support (138a à 138f) se trouvent dans la première position; et
si une ou plusieurs couches de produits (116) ont été enlevées de la caisse (100), déplacer les tiges de support (138a à 138f) de la première position à la deuxième position, d'où les tiges de support (138a à 138f) pénètrent dans la caisse (100) et soulèvent le support inséré (118) avec les produits (116) y disposés par rapport au fond (102) de la caisse (100).

15. Procédé selon la revendication 14, dans lequel la profondeur de pénétration des tiges de support (138a à 138f) à l'intérieur de la caisse (100) est augmentée à un nombre décroissant de couches de produits, de sorte qu'une couche de produits soit disposée à proximité d'un bord supérieur de la caisse (100).
